# EUROPÄISCHE PATENTANMELDUNG

(11) **EP 0 523 524 A1**
(43) Veröffentlichungstag der Anmeldung: **20.01.1993**
(21) Anmeldenummer: 92111555.6
(22) Anmeldetag: 08.07.1992
(51) Int. Cl.: C12J 1/10

(54) **Verfahren sowie Festbettreaktor zur Essigherstellung**

(30) Priorität: 15.07.1991 DE 9108665 U
(71) Anmelder: CARL KÜHNE KG, D-22761 Hamburg (DE)
(72) Erfinder: Steckowski, Ulrich, Dr., W-2083 Halstenbek (DE)
(74) Vertreter: DIEHL GLAESER HILTL & PARTNER

(57) **Zusammenfassung**

Verfahren zur Herstellung von Gärungsessig, bei welchem temperierte alkoholhaltige Maische in ein mit Essigsäurebakterien besiedeltes Festbett geleitet und Sauerstoff (Luft) in Gegenrichtung in das Festbett gedrückt wird. Für das Festbett wird ein Material aus der Gruppe der Silicate verwendet, das eine große spezifische innere Oberfläche und offenporige Struktur hat.

## Beschreibung

Die Erfindung bezieht sich auf ein Verfahren zur Herstellung von Gärungsessig, bei welchem temperierte alkoholhaltige Maische in ein mit Essigsäurebakterien besiedeltes Festbett geleitet und Sauerstoff (Luft) in Gegenrichtung in das Festbett gedrückt wird, sowie auf einen Festbettreaktor zur Herstellung von Gärungsessig, in welchem temperierte alkoholhaltige Maische in ein mit Essigsäurebakterien besiedeltes Festbett geleitet und der zur sog. Gärung bzw. Fermentation (Oxydation) erforderliche Sauerstoff (Luft) in Gegenrichtung in das Festbett gedrückt wird.

Neben dem sogenannten Submers-Verfahren gibt es zur Essigherstellung ein über 100 Jahre praktiziertes Verfahren der Versäuerung mit sogenannten "Generatoren" bzw. Rundpumpbildnern. Es handelt sich hierbei um Reaktoren, die ein Festbett enthalten, welches aus Buchenholzspänen gebildet ist. Die Buchenholzspäne dienen zur Fixierung der Essigbakterien. Die Späne ruhen auf einem Lattenrost, der sich etwa in einem Drittel der Höhe des Reaktors bzw. Bottiches befindet. Die Späne werden im permanenten Betrieb ständig mit einer Lösung (Maische) berieselt, die aus Wasser, Alkohol, Säure und Nährstoffen besteht. Im Gegenstrom wird von unten her Luft eingeblasen, um den für den Oxidationsvorgang erforderlichen Sauerstoff zur Verfügung zu stellen.

Die Versäuerungsrate ist verhältnismäßig gering, die Chargenzeit liegt im Bereich von 4 bis 8 Tagen, wobei es sich hierbei um die Zeit zwischen der Zugabe einer frischen Maische in den Spanbildner bis zur Entnahme eines Großteils des Rohessigs aus dem Bildner handelt. Die Effektivität bzw. die Versäuerungsleistung wird in kg erzeugter Säure pro m³ Spanraum während einer Zeitspanne von 24 Stunden gemessen und liegt üblicherweise im Bereich von 4 bis 9 kg Säure / m³ x d.

Das Herstellverfahren ist im wesentlichen seit längerer Zeit das gleiche, jedoch hat es eine Zunahme des Fassungsvermögens des Reaktors von ursprünglich 100 l bis heutzutage in die Größenordnung von 80.000 l gegeben.

Bevor sich die Buchenholzspäne vor langer Zeit haben durchsetzen können, gab es auch bereits andere Träger für die Essigsäurebakterien, beispielsweise Birkenreisig, Maiskolben und sogar Koks.

Der Gärungsprozeß bzw. der Oxidationsvorgang muß bei einer nach oben begrenzten Temperatur durchgeführt werden. Durch den Oxidationsvorgang entsteht Wärme und eine Erhöhung der Temperatur auf über 38°C könnte zur Hemmung der Bakterien und späterem Absterben führen. Andererseits muß mit einer über den Festbettreaktor ungünstigen räumlichen Temperaturverteilung gerechnet werden, was vor allem auf die räumliche Ausgestaltung des Reaktors zurückzuführen ist. Dieser besteht nämlich aus einem Holzbottich von einigen m Durchmesser und etwa 5 m Höhe. Ein solcher Behälter ist insbesondere wegen der geringen Menge an gekühlter Maische, die auf das Festbett aufgegeben werden kann, hinsichtlich seiner Temperaturverteilung ungünstig.

Die Erfindung befaßt sich mit der Problematik, ein Herstellverfahren bzw. einen Festbettreaktor der eingangs genannten Art so auszugestalten, daß deutlich höhere Durchsatzmengen unter ansonsten gleichen Bedingungen erzielt werden können.

Diese Probleme werden durch die in den Kennzeichen der Ansprüche angegebenen Merkmale gelöst.

Für die vorliegende Erfindung ist von besonderer Bedeutung, daß anstelle der Buchenholzspäne ein feinkörniges Material eingesetzt wird, das sehr porös ist und auch eine große spezifische innere Oberfläche aufweist. Dadurch wird den Essigsäurebakterien insgesamt ein großer Lebensraum zur Verfügung gestellt, so daß eine grobe aktive Oberfläche auf die eingeleitete Maische einwirken kann. Das Granulat hat vorteilhafter Weise ein geringes spezifisches Gewicht, was aufgrund der Porösität des gewählten Granulats auch zu erwarten ist. Dies führt dazu, daß bei gleichbleibender Reaktorgröße eine größere aktive Oberfläche zur Verfügung gestellt werden kann oder größere Bottiche gebaut werden können, ohne daß es Festigkeitsprobleme gibt.

Bevorzugterweise wird eine offenporige Struktur für das Granulat bei einer Körnung im Bereich unter 10 mm gewählt. Vorzugsweise kann ein Aluminiumsilicatgranulat bzw. Natrium-Aluminiumsilicatgranulat oder eine Mischung derartiger Materialien eingesetzt werden, welches sich im Hinblick auf die mechanischen Anforderungen und die Alkohol- und Säurebeständigkeit bewährt hat.

Aufgrund der größeren aktiven Oberfläche des Festbettreaktors kann eine höhere Menge Maische eingeleitet werden, und anstelle der bisher üblichen Spritzräder kann die Maische über Düsen eingegeben werden. Aufgrund dieser größeren Maischemenge kann die Temperaturverteilung im Festbettreaktor vergleichmäßigt werden, so daß beispielsweise mit höherer mittlerer Temperatur gefahren werden kann, ohne daß die Gefahr besteht, daß die Bakterien irreparabel geschädigt werden. Auch hieraus ergibt sich wiederum eine erhöhte Rentabilität des Festbettreaktors gemäß der vorliegenden Erfindung.

Darüber hinaus ist es möglich, eine zusätzliche Luftzirkulation mit Hilfe eines Umluftgebläses durchzuführen, was weiterhin zur Vergleichmäßigung der Luftverteilung und darüber hinaus zu höheren Durchsätzen beiträgt.

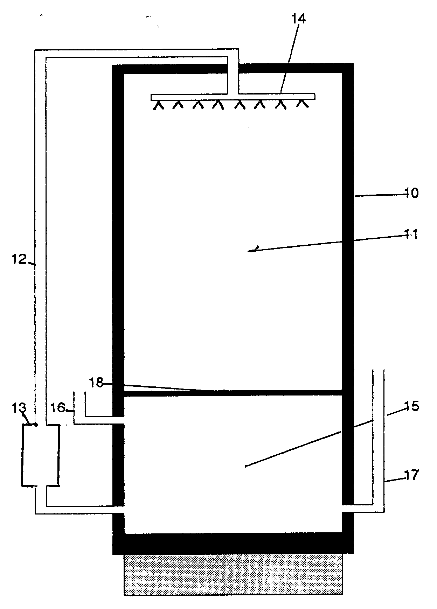

Die Erfindung wird nachfolgend anhand der Zeichnung beispielsweise erläutert. Diese zeigt eine Längsquerschnittsansicht durch einen Festbettreaktor gemäß der Erfindung.

Mit 10 ist der Festbettreaktor bezeichnet, der im wesentlichen Zylinderform hat und auf geeigneten Auflagern auf dem Fundament aufruht. Im oberen Raum des Festbettreaktors 10 befindet sich das eigentliche Festbett 11, welches aus einem Granulat oder mindestens einem Körper mit großer innerer Oberfläche und geringem spezifischen Gewicht gebildet ist.

Unterhalb eines Lattenrostes 18 befindet sich der Sammelraum 15. In diesem Sammelraum 15 wird über eine oder mehrere Leitungen 16 Luft bzw. Sauerstoff zugeführt, so daß dieser von unten her in das Festbett 11 gelangen kann. Das mit Sauerstoff abgereicherte Restvolumen verläßt schließlich im oberen Bereich (nicht gezeigt) den Festbettreaktor 10.

Aus dem Sammelraum 15 führt weiterhin eine Leitung heraus, welche warme Maische enthält, die durch eine Einrichtung 13 über eine Leitung 12 in den oberen Raum des Festbettreaktors 10 gelangt. Mit 13 ist schematisch eine Kühleinrichtung und eine Pumpe bezeichnet, welche die Maische auf der geeigneten Temperatur hält und zudem für die Einleitung der Maische in den Festbettreaktor 1 sorgt.

Mit 14 ist ein Rohr oder eine Verteilung bezeichnet, von welcher Düsen ausgehen, die die umlaufende gekühlte Maische direkt auf das Festbett leitet.

## Patentansprüche

1. Verfahren zur Herstellung von Gärungsessig, bei welchem temperierte alkoholhaltige Maische in ein mit Essigsäurebakterien besiedeltes Festbett geleitet und Sauerstoff (Luft) in Gegenrichtung in das Festbett gedrückt wird, dadurch gekennzeichnet, daß für das Festbett ein Material aus der Gruppe der Silicate verwendet wird, das eine große spezifische innere Oberfläche und eine offenporige Struktur hat.

2. Festbettreaktor zur Herstellung von Gärungsessig, in welchem temperierte alkoholhaltige Maische in ein mit Essigsäurebakterien besiedeltes Festbett geleitet und der zur sog. Gärung bzw. Fermentation (Oxydation) erforderliche Sauerstoff (Luft) in Gegenrichtung in das Festbett gedrückt wird, dadurch gekennzeichnet, daß das Festbett (11) entweder aus feinteiligem Material, insbesondere feinkörnigem, mineralischem, keramischem, organischem oder anorganischem Granulat, mit großer innerer Oberfläche, oder aus mindestens einem derartigen Materialteil oder -körper mit großer innerer Oberfläche gebildet ist.

3. Festbettreaktor nach Anspruch 2, dadurch gekennzeichnet, daß das Material bzw. Granulat eine Körnung im Bereich von einigen mm, vorzugsweise unter 10 mm, aufweist.

4. Festbettreaktor nach einem der Ansprüche 2 oder 3, dadurch gekennzeichnet, daß das Material bzw. Granulat eine spezifische Oberfläche im Bereich von 0,5 m²/g bis 0,6 m²/g aufweist.

5. Festbettreaktor nach einem der Ansprüche 2 bis 4, dadurch gekennzeichnet, daß das Material bzw. Granulat eine offenporige Struktur hat.

6. Festbettreaktor nach einen der Ansprüche 2 bis 5, dadurch gekennzeichnet, daß das Material bzw. Granulat aus zersetzungsfreiem, insbesondere alkohol- bzw. essigsäurebeständigen Material, gebildet ist.

7. Festbettreaktor nach einen der Ansprüche 2 bis 6, dadurch gekennzeichnet, daß das Material bzw. Granulat aus Aluminiumsilicat besteht.

8. Festbettreaktor nach einen der Ansprüche 2 bis 7, dadurch gekennzeichnet, daß das Festbett (11) im unteren Bereich des Reaktors (10) aus grobkörnigerem Material im Vergleich zu dem im oberen Bereich gebildet ist.
